# EUROPÄISCHE PATENTSCHRIFT

(11) **EP 2 100 062 B1**
(45) Veröffentlichungstag und Bekanntmachung des Hinweises auf die Patenterteilung: **28.07.2010**
(21) Anmeldenummer: 07822406.0
(22) Anmeldetag: 09.11.2007
(51) Int. Cl.: F16K 11/048, F16K 17/194, F16K 24/06

(54) **ENTLÜFTUNGSEINRICHTUNG ZUM ENTLÜFTEN EINER FLÜSSIGKEIT**
DEVICE FOR DEGASSING A LIQUID
DISPOSITIF D'AÉRATION POUR AÉRER UN LIQUIDE

(30) Priorität: 10.11.2006 DE 102006053035
(43) Veröffentlichungstag der Anmeldung: 16.09.2009
(73) Patentinhaber: MAHLE International GmbH, 70376 Stuttgart (DE)
(72) Erfinder: EISELE, Peter, 74182 Obersulm-willsbach (DE); JARBOT, Gerd, 79613 Öhringen (DE); LOB, Christian, 74078 Heilbronn (DE)
(74) Vertreter: BRP Renaud & Partner
(86) Internationale Anmeldenummer: PCT/EP2007/062105
(87) Internationale Veröffentlichungsnummer: WO 2008/055968

(56) Entgegenhaltungen:
- WO-A-00/56138
- WO-A-86/03272
- GB-A- 1 279 199

## Beschreibung

Die Erfindung betrifft eine Entlüftungseinrichtung zum Entlüften einer Flüssigkeit, gemäß dem Oberbegriff des Anspruchs 1.

Eine Entlüftungseinrichtung dieser Art ist bereits aus dem Dokument WO 8603272 bekannt.

Um eine einwandfreie Funktion von mit Flüssigkeiten, beispielsweise Ölen, betriebenen Systemen gewährleisten zu können, ist es oftmals erforderlich, die Flüssigkeiten zu entlüften. Von entscheidender Bedeutung ist dies insbesondere bei Flüssigkeitssystemen, welche einen auf die Flüssigkeit aufgebrachten hydraulischen Druck zur Funktion benötigen.

Im Kraftfahrzeugbau, insbesondere bei Verbrennungsmotoren, sind dabei Entlüftungseinrichtungen bekannt, welche ein federbeaufschlagtes Ventil aufweisen. Derartige federbelastete Entlüftungseinrichtungen haben jedoch den Nachteil, dass sie bei bestimmten Frequenzen zu Schwingungen angeregt werden, welche im ungünstigsten Fall ein Pulsieren der beweglichen Teile in der Entlüftungseinrichtung bewirken, wodurch ein exaktes und definiertes Öffnen und Schließen der Entlüftungseinrichtung gar nicht oder nur unzuverlässig gegeben ist. Durch das unkontrollierte Öffnen und Schließen tritt bei den bekannten Entlüftungseinrichtungen oftmals das Problem auf, dass die zu entlüftende Flüssigkeit in die Umgebung gelangt und dadurch zu einer Kontamination derselben führt.

Die Erfindung beschäftigt sich mit dem Problem, für eine Entlüftungseinrichtung der gattungsgemäßen Art eine verbesserte oder zumindest eine andere Ausführungsform anzugeben, welche insbesondere ein Pulsieren und dadurch ein unkontrolliertes.Öffnen und Schließen im Betriebszustand der Entlüftungseinrichtung verhindert.

Dieses Problem wird durch eine Entlüftungseinrichtung mit sämtlichen Merkmalen des Patentanspruchs 1 gelöst. Vorteilhafte und zweckmäßige Ausgestaltungen der Erfindung sind Gegenstand der abhängigen Unteransprüche.

Die Erfindung beruht auf dem allgemeinen Gedanken, eine bisher eingesetzte Feder zur Erzeugung einer Bewegung eines Ventilkörpers gegen einen Ventilsitz durch ein Masseelement zu ersetzen und dadurch die wegabhängige Kraft der Feder durch eine stets gleiche Gewichtskraft des Masseelementes zu ersetzen. Durch diesen Umstand kann das Pulsieren des Ventilkörpers im Betriebszustand der Entlüftungseinrichtung wirksam unterbunden werden, wodurch insbesondere ein unkontrolliertes Austreten von zu entlüftender Flüssigkeit aus der Entlüftungseinrichtung in die Umgebung zuverlässig verhindert werden kann. Die im Einbauzustand stehend angeordnete Entlüftungseinrichtung weist hierzu einen, in einem Kolbenraum mittels der zu entlüftenden Flüssigkeit hubverstellbar angeordneten Kolben auf, welcher mit einer Kolbenstange durch eine deckenseitige Entlüftungsöffnung des Kolbenraums ragt und wobei auf einer dem Kolbenraum abgewandten Seite der Kolbenstange das Massenelement an der Kolbenstange angeordnet ist. Dabei ist zwischen dem Masseelement und der Entlüftungsöffnung einerseits und zwischen dem Kolben und der Entlüftungsöffnung andererseits jeweils eine Dichtung angeordnet, so dass der zwischen zwei Hubendstellungen verstellbare Kolben beziehungsweise das Masseelement in der jeweiligen Hubendstellung die Entlüftungsöffnung dicht verschließt. In der unteren Hubendstellung verschließt dabei das Masseelement über eine erste Dichtung die Entlüftungsöffnung und verhindert dadurch ein Ansaugen von Luft in den Kolbenraum, während in der oberen Hubendstellung der Kolben über eine zweite Dichtung die Entlüftungsöffnung verschließt und dadurch eine Austreten der zu entlüftenden Flüssigkeit in die Umgebung verhindert. Zwischen den zwei Hubendstellungen kann Luft aus dem Kolbenraum in die Umgebung austreten. Das Masseelement ist an einem oberen Ende der Kolbenstange angeordnet und drückt den Kolben nach unten in dessen untere Hubendstellung. Dieses nach unten Drücken wurde bisher üblicherweise von einer Feder mit einer entsprechenden Federkennlinie bewirkt, wobei hier die Federkraft abhängig vom Federweg war. Beim erfindungsgemäßen Masseelement ist die Kraft durch das Gewicht des Masseelementes stets gleich, so dass die vom Masseelement auf den Kolben ausgeübte Kraft in allen Hubstellungen gleich ist. Diese Tatsache verhindert das als großen Nachteil aus dem Stand der Technik bekannte Pulsieren des Kolbens, wodurch die erfindungsgemäße Entlüftungseinrichtung wesentlich zuverlässiger arbeitet.

Bei einer vorteilhaften Weiterbildung der erfindungsgemäßen Lösung weist der Kolbenraum einen oberhalb des Kolbens gelegenen Gassammelraum sowie einen unterhalb des Kolbens gelegenen Flüssigkeitsraum auf, wobei zwischen den beiden Räumen ein durch den Kolben und ein Gehäuse der Entlüftungseinrichtung begrenzter Ringraum angeordnet ist, welcher als Verzögerungsraum ausgebildet ist oder zumindest einen solchen aufweist und welcher mit dem Gassammelraum und dem Flüssigkeitsraum kommunizierend verbunden ist. Ein derartiger Verzögerungsraum verzögert eine Steigbewegung der Flüssigkeit während des Entlüftungsvorgangs und ermöglicht somit ein kurzzeitig längeres Verbleiben des Kolbens in einer die Entlüftungsöffnung offenhaltenden Zwischenstellung. Der Verzögerungsraum muss beim Entlüftungsvorgang zunächst mit der zu entlüftenden Flüssigkeit befüllt werden, wobei das Befüllen des Verzögerungsraums mit Flüssigkeit eine gewisse Zeit in Anspruch nimmt, in welcher das im Gassammelraum gesammelte und komprimierte Gas, insbesondere die dort gesammelte Luft, durch die Entlüftungsöffnung in die Umgebung gepresst werden kann. Der Verzögerungsraum ermöglicht dadurch eine verbesserte Funktion der Entlüftungseinrichtung.

Zweckmäßig ist die Kolbenstange als Gewindestange ausgebildet, an der einenends der Kolben und an der anderenends das Masseelement angeschraubt sind. Eine derartige Ausbildung der Kolbenstange bietet den großen Vorteil, dass sich die Montage der Entlüftungseinrichtung sehr einfach gestaltet, da lediglich das Masseelement beziehungsweise der Kolben jeweils endseitig der Gewindestange angeschraubt werden müssen. Gleichzeitig bilden die Gewindegänge der Gewindestange zusammen mit einer Wand der Entlüftungseinrichtung eine Drossel, wodurch der Entlüftungsvorgang ebenfalls verzögert wird. Die Gewindegänge der Kolbenstange bewirken dabei beim nach oben Verstellen des Kolbens ein gedrosseltes Ausblasen von Luft, wodurch zunächst die Luft im Gassammelraum komprimiert wird. Das derartig im Gassammelraum komprimierte Luftpolster verhindert ein zu schnelles nach oben steigen der zu entlüftenden Flüssigkeit verbunden mit einem Austreten derselben durch die Entlüftungsöffnung nach außen.

Vorteilhafte, näher erläuterte Ausführungsbeispiele sind in den Zeichnungen jeweils schematisch dargestellt.

Dabei zeigen,
- Fig. 1: eine erfindungsgemäße Entlüftungseinrichtung mit ei- nem Kolben in einer unteren Hubendstellung,
- Fig. 2: eine Darstellung wie in Fig. 1, jedoch mit dem Kol- ben in seiner oberen Hubendstellung,
- Fig. 3: eine Schutzabdeckung für eine erfindungsgemäße Ent- lüftungseinrichtung.

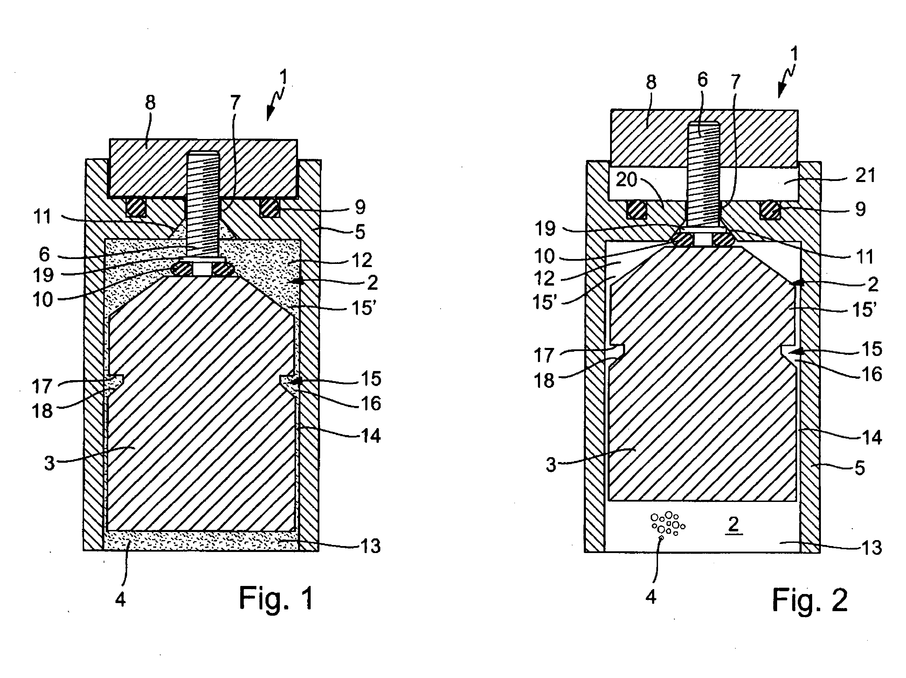

Entsprechend Fig. 1 weist eine erfindungsgemäße Entlüftungseinrichtung 1 zum Entlüften einer Flüssigkeit 4, insbesondere zum Entlüften von Öl in einem Ölsystem eines Verbrennungsmotors, einen Kolbenraum 2 sowie einen darin hubverstellbar angeordneten Kolben 3 auf. Die Entlüftungseinrichtung 1 ist dabei vorzugsweise am höchsten Punkt des Flüssigkeitssystems eingebaut, so dass in der Flüssigkeit 4 vorhandenes Gas, insbesondere Luft, in die Entlüftungseinrichtung 1 aufsteigen kann. Darüber hinaus ist die Entlüftungseinrichtung 1, wie in den Fig. 1 und 2 gezeigt, stehend eingebaut, so dass der Kolben 3 im Kolbenraum 2 nach oben oder unten hubverstellbar ist. Eine Hubverstellung des Kolbens 3 nach oben wird dabei über die zu entlüftende Flüssigkeit 4 bewirkt. Der Kolben 3 ist vorzugsweise zylinderförmig ausgebildet und im Kolbenraum 2, welcher Teil eines Gehäuses 5 der Entlüftungseinrichtung 1 ist, geführt.

An seinem oberen Ende weist der Kolben 3 eine Kolbenstange 6 auf, die durch eine deckenseitige Entlüftungsöffnung 7 des Kolbenraums 2 ragt. Auf der dem Kolbenraum 2 abgewandten Seite der Entlüftungsöffnung 7 ist ein, über die Kolbenstange 6 mit dem Kolben 3 verbundenes Masseelement 8 hubverstellbar angeordnet, wobei der Kolben 3 und das Masseelement 8 zusammen zwischen zwei Hubendstellungen (vgl. Fig. 1 und 2) verstellbar sind. Die Kolbenstange 6 ist dabei vorzugsweise als Gewindestange ausgebildet, an der einenends der Kolben 3 und anderenends das Masseelement 8 angeschraubt sind. Die Gewindegänge der als Gewindestange ausgebildete Kolbenstange 6 bilden zusammen mit einer Wand der Entlüftungsöffnung 7 eine Drossel, welche den Entlüftungsvorgang verzögert und dadurch ein Austreten der zu entlüftenden Flüssigkeit 4 aus der Entlüftungsöffnung 7 in die Umgebung verhindert.

Wie oben erwähnt, sind der Kolben 3 und damit auch das über die Kolbenstange 6 mit dem Kolben 3 verbundene Masseelement 8 zwischen zwei Hubendstellungen verstellbar, wobei in Fig. 1 die untere Hubendstellung und in Fig. 2 die obere Hubendstellung gezeigt ist. In der unteren Hubendstellung verschließt das Masseelement 8 über eine erste Dichtung 9 die Entlüftungsöffnung 7 und verhindert dadurch ein Ansaugen von Luft in den Kolbenraum 2, beziehungsweise ein Leerlaufen des Systems im drucklosen Zustand. In der oberen Hubendstellung gemäß Fig. 2 verschließt der Kolben 3 über eine zweite Dichtung 10 die Entlüftungsöffnung 7 und verhindert dadurch ein Austreten der zu entlüftenden Flüssigkeit 4 durch die Entlüftungsöffnung 7 in die Umgebung. Zwischen den beiden Hubendstellungen kann Luft aus dem Kolbenraum 2 durch die Entlüftungsöffnung 7 in die Umgebung gelangen.

Generell ist der Kolbenraum 2 in einen oberhalb des Kolbens 3 gelegenen Gassammelraum 12 sowie einen unterhalb des Kolbens 3 gelegenen Flüssigkeitsraum 13 unterteilt, wobei zwischen den beiden Räumen 12 und 13 ein durch den Kolben 3 und das Gehäuse 5 der Entlüftungseinrichtung 1 begrenzter Ringraum 14 angeordnet ist. Dieser Ringraum 14 ist als Verzögerungsraum 15 ausgebildet oder weist zumindest einen solchen auf und ist sowohl mit dem Gassammelraum 12 als auch mit dem Flüssigkeitsraum 13 kommunzierend verbunden. Der Verzögerungsraum 15 kann dabei unterschiedlich ausgebildet sein, wobei bei der in den Fig. 1 und 2 dargestellten Ausführungsform der Kolben 3 eine radial nach innen zurückversetzte Ringnut 16 aufweist, welche den Verzögerungsraum 15 bildet. Selbstverständlich ist auch denkbar, dass der Verzögerungsraum 15 durch zumindest eine am Gehäuse 5 ausgebildete Ringnut gebildet ist. In jedem Fall verzögert die Ringnut 16 einen Flüssigkeitsanstieg der zu entlüftenden Flüssigkeit 4 im Kolbenraum 2 während des Entlüftens und verbessert dadurch die Entlüftungsfunktion der Entlüftungseinrichtung 1.

Die in den Fig. 1 und 2 dargestellte Ringnut 16 weist eine zur Radialrichtung des Kolbens parallele Oberkante 17 sowie eine dazu abgeschrägte Unterkante 18 auf. Diese Ausbildung der Oberkante 17 beziehungsweise der Unterkante 18 wirkt sich dabei besonders positiv auf ein Füllen der Ringnut 16 während des Entlüftens aus. Denkbar sind natürlich auch andere Querschnittsformen der Ringnut 16. Insgesamt ist der Verzögerungsraum 15, insbesondere die Ringnut 16, in einem oberen Drittel des Kolbens 3 angeordnet. An seinem oberen, der Entlüftungsöffnung 7 zugewandten Ende, ist der Kolben 3 zur Kolbenstange 6 hin konisch verjüngt, wodurch ebenfalls ein Verzögerungsraum 15' gebildet werden kann. Nach oben anschließend an die konische Verjüngung ist die O-ringförmige zweite Dichtung 10, die Kolbenstange 6 umschließend angeordnet, wobei an der Kolbenstange 6 ein ringförmig nach radial außen abstehender Kragen 19 angeordnet ist, welcher die zweite Dichtung 10 gegen den Kolben 3 spannt. Der Kragen 19 kann beispielsweise als ein auf der Gewindestange ausgebildeten Kolbenstange 6 verdrehbarer Ring ausgebildet sein, wodurch er durch eine Drehbewegung gegen die zweite Dichtung 10 und dadurch die zweite Dichtung 10 gegen den Kolben 3 verspannen kann.

Dabei sind vorzugsweise die erste und die zweite Dichtung 9, 10 als O-Ringdichtungen ausgebildet, wobei die erste Dichtung 9, wie in den Fig. 1 und 2 gezeigt, in eine, die Entlüftungsöffnung 7 aufweisende Wand 20 eingelassen und dem Masseelement 8 zugewandt ist. Denkbar ist natürlich auch, dass die erste Dichtung 9 nicht in die Wand 20, sondern in das Masseelement 8 eingelassen ist.

Der Kolben 3 ist wie eingangs der Figurenbeschreibung erwähnt, im Kolbenraum 2 beziehungsweise im Gehäuse 5 der Entlüftungseinrichtung 1 geführt, wobei zusätzlich denkbar ist, dass das Masseelement 8 kolbenartig in einem zweiten Kolbenraum 21 der Entlüftungseinrichtung 1 geführt ist und dadurch eine besonders präzise Hubverstellung der Kolben-Kolbenstange-Masseelement-Baugruppe gegeben ist.

Im Folgenden soll kurz die Funktionsweise der erfindungsgemäßen Entlüftungseinrichtung 1 beschrieben werden:

Zunächst befindet sich Lüftungseinrichtung 1 im, in Fig. 1 dargestellten Zustand, in welchem das Masseelement 8 über die erste Dichtung 9 die Entlüftungsöffnung 7 verschließt und dadurch ein Ansaugen von Luft in den Kolbenraum 2 beziehungsweise in den Gassammelraum 12 verhindert. Da sich die Entlüftungsöffnung 1 vorzugsweise am obersten Punkt des Flüssigkeitssystems befindet, steigt das in der Flüssigkeit 4 vorhandene Gas, insbesondere die Luft, nach oben in den Gassammelraum 12 auf. Im Betrieb des Systems wird der Kolben 3 von unten mittels der Flüssigkeit 4 mit Druck beaufschlagt, woraufhin sich der Kolben 3 nach oben verstellt und die Entlüftungsöffnung 7 geöffnet wird. In diesem Zustand kann die Luft beziehungsweise das Gas aus dem Gassammelraum 12 durch die Entlüftungsöffnung 7 nach außen entweichen. Im weiteren Verlauf wird der Kolben 3 weiter nach oben verstellt, während die Flüssigkeit 4 im Ringraum 14 seitlich zwischen dem Kolben 3 und dem Gehäuse 5 nach oben steigt. Dabei füllt sie auch den in diesem Ringraum 14 vorgesehenen Verzögerungsraum 15, der den Flüssigkeitsanstieg im Kolbenraum 2 verlangsamt. Beim weiteren Druckanstieg beziehungsweise beim weiteren Anstieg des Kolbens 3 nach oben erreicht dieser schließlich seine obere Hubendstellung, wie in Fig. 2 dargestellt, in welcher er sich über die zweite Dichtung 10 an einen Randbereich 11 der Entlüftungsöffnung 7 anlegt und diese dicht abschließt, so dass keine Flüssigkeit 4 durch die Entlüftungsöffnung 7 nach außen gelangen kann.

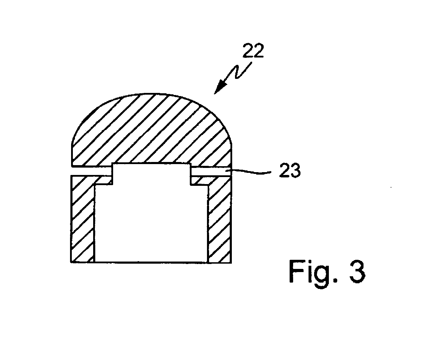

Gemäß Fig. 3 ist eine Abdeckkappe 22 gezeigt, die ein masseelementseitiges Ende der Entlüftungseinrichtung 1 überdeckt und ein Eindringen von Schmutz in die Flüssigkeit 4 verhindert. Eine derartige Abdeckkappe 22 kann beispielsweise aus Kunststoff ausgebildet sein und erlaubt auch im auf der Entlüftungseinrichtung 1 aufgesetzten Zustand eine Entlüftung der Flüssigkeit 4 durch entsprechende Entlüftungskanäle 23.

## Patentansprüche

1. Entlüftungseinrichtung (1) mit einer Flüssigkeit zum Entlüften derselben, insbesondere zum Entlüften von Öl in einem Ölsystem eines Verbrennungsmotors, wobei,
- die in einem Einbauszustand stehend angeordnete Entlüftungseinrichtung (1) einen, in einem Kolbenraum (2) mittels der zu entlüftenden Flüssigkeit (4) hubverstellbar angeordneten Kolben (3) aufweist, welcher mit einer Kolbenstange (6) durch eine deckenseitige Entlüftungsöffnung (7) des Kolbenraums (2) ragt, **gekennzeichnet durch** die Merkmale,
- auf der dem Kolbenraum (2) abgewandten Seite der Entlüftungsöffnung (7) ist ein, über die Kolbenstange (6) mit dem Kolben (3) verbundenes Masseelement (8) hubverstellbar angeordnet, wobei der Kolben (3) und das Masseelement (8) zusammen zwischen zwei Hubendstellungen verstellbar sind,
- in der unteren Hubendstellung verschließt das Masseelement (8) über eine erste Dichtung (9) die Entlüftungsöffnung (7) und verhindert **dadurch** ein Ansaugen von Luft in den Kolbenraum (2),
- in der oberen Hubendstellung verschließt der Kolben (3) über eine zweite Dichtung (10) die Entlüftungsöffnung (7) und verhindert **dadurch** ein Austreten der zu entlüftenden Flüssigkeit (4),
- in einer Zwischenstellung kann Luft aus dem Kolbenraum (2) in die Umgebung gelangen,
- das Masseelement (8) spannt den Kolben (3) in die untere Hubendstellung vor.

2. Entlüftungseinrichtung nach Anspruch 1,
**dadurch gekennzeichnet,**
**dass** der Kolbenraum (2) einen oberhalb des Kolbens (3) gelegenen Gassammelraum (12) und einen unterhalb des Kolbens (3) gelegenen Flüssigkeitsraum (13) aufweist, wobei zwischen den beiden Räumen (12, 13) ein durch den Kolben (3) und ein Gehäuse (5) der Entlüftungseinrichtung (1) begrenzter Ringraum (14) angeordnet ist, der als Verzögerungsraum (15) ausgebildet ist oder zumindest eine solchen aufweist und der mit dem Gassammelraum (12) und dem Flüssigkeitsraum (13) kommunizierend verbunden ist.

3. Entlüftungseinrichtung nach Anspruch 2,
**dadurch gekennzeichnet,**
**dass** der Verzögerungsraum (15) durch zumindest eine am Kolben (3) und/oder am Gehäuse (5) ausgebildete Ringnut (16) gebildet ist, welche einen Flüssigkeitsanstieg der zu entlüftenden Flüssigkeit (4) im Kolbenraum (2) während des Entlüftens verzögert.

4. Entlüftungseinrichtung nach einem der Ansprüche 1 bis 3,
**dadurch gekennzeichnet,**
**dass** die Kolbenstange (6) als Gewindestange ausgebildet ist, an der einenends der Kolben (3) und anderenends das Masseelement (8) angeschraubt sind.

5. Entlüftungseinrichtung nach Anspruch 4,
**dadurch gekennzeichnet,**
**dass** Gewindegänge der als Gewindestange ausgebildeten Kolbenstange (6) in der Entlüftungsöffnung (7) zusammen mit einer Wand der Entlüftungsöffnung (7) eine Drossel bilden.

6. Entlüftungseinrichtung nach einem der Ansprüche 1 bis 5,
**dadurch gekennzeichnet,**
**dass** der Kolben (3) an seinem, der Entlüftungsöffnung (7) zugewandten Ende zur Kolbenstange (6) hin konisch verjüngt ist.

7. Entlüftungseinrichtung nach einem der Ansprüche 1 bis 6, **dadurch gekennzeichnet,**
**dass** das Masseelement (8) in einem zweiten Kolbenraum (2) geführt ist.

8. Entlüftungseinrichtung nach einem der Ansprüche 1 bis 7.
**dadurch gekennzeichnet,**
**dass** eine Abdeckkappe (22) vorgesehen ist, welche ein masseelmentseitiges Ende der Entlüftungseinrichtung (1) überdeckt und ein Eindringen von Schmutz in die Flüssigkeit (4) verhindert.

9. Entlüftungseinrichtung nach einem der Ansprüche 1 bis 8,
**dadurch gekennzeichnet,**
**dass** die erste und/oder die zweite Dichtung (9, 10) als O-Ring Dichtung ausgebildet sind/ist.

10. Entlüftungseinrichtung nach einem der Ansprüche 1 bis 9,
**dadurch gekennzeichnet,**
**dass** die erste Dichtung (9) in eine, die Entlüftungsöffnung (7) aufweisende Wand (21) eingelassen und dem Masseelement (8) zugewandt ist.

11. Entlüftungseinrichtung nach einem der Ansprüche 4 bis 10,
**dadurch gekennzeichnet,**
**dass** an der als Gewindestange ausgebildeten Kolbenstange (6) ein ringförmig nach radial außen abstehender Kragen (19) vorgesehen ist, welcher die zweite Dichtung (10) gegen den Kolben (3) spannt.

## Claims

1. A degassing device (1) with a liquid for degassing the same, in particular for degassing oil in an oil system of an internal combustion engine, wherein
- the degassing device (1) that is vertically arranged in a mounted state comprises a piston (3) which can be vertically displaced in a piston chamber (2) by means of the liquid (4) that is to be degassed and which projects with a piston rod (6) through a top degassing opening (7) of the piston chamber (2), **characterized by** the features
- on the degassing opening's (7) side facing away from the piston chamber (2), a mass element (8) connected to the piston (3) by means of the piston rod (6) is arranged in a vertically movable manner, wherein the piston (3) and the mass element (8) can be moved together between two stroke end positions,
- in the lower stroke end position, the mass element (8) closes the degassing opening (7) by means of a first seal (9) and thus prevents air from getting sucked into the piston chamber (2),
- in the upper stroke end position, the piston (3) closes the degassing opening (7) by means of a second seal (10) and thus prevents liquid (4) to be degassed from escaping,
- in an intermediate position, air can escape from the piston chamber (2) into the environment,
- the mass element (8) preloads the piston (3) into the lower stroke end position.

2. The degassing device according to claim 1,
**characterized in**
the piston chamber (2) comprises a gas collection chamber (12) arranged above the piston (3) and a liquid chamber (13) arranged below the piston (3), wherein between the two chambers (12, 13), an annular chamber (14) is arranged which is bordered by the piston (3) and a housing (5) of the degassing device (1) and which is configured as delay chamber (15) or at least comprises one, and which is connected to the gas collection chamber (12) and the liquid chamber (13) in a communicating manner.

3. The degassing device according to claim 2,
**characterized in**
**that** the delay chamber (15) is formed by at least one ring groove (16) which is provided on the piston (3) and/or on the housing (5) and which delays a liquid rise of the liquid (4) to be degassed in the piston chamber (2) during degassing.

4. The degassing device according to any one of the claims 1 to 3,
**characterized in**
**that** the piston rod (6) is configured as threaded rod, on the one end of which the piston (3) is screwed on and on the other end, the mass element (8) is screwed on.

5. The degassing device according to claim 4,
**characterized in**
**that** thread turns of the piston rod (6) configured as threaded rod, together with a wall of the degassing opening (7), form a throttle in the degassing opening (7).

6. The degassing device according to any one of the claims 1 to 5,
**characterized in**
**that,** on its end facing the degassing opening (7), the piston (3) is conically tapered toward the piston rod (6).

7. The degassing device according to any one of the claims 1 to 6,
**characterized in**
**that** the mass element (8) is guided in a second piston chamber (2).

8. The degassing device according to any one of the claims 1 to 7,
**characterized in**
**that** a protective cap (22) is provided which covers an end of the degassing opening (1) on the mass element side and prevents dirt from penetrating into the liquid (4).

9. The degassing device according to any one of the claims 1 to 8,
**characterized in that** the first and/or the second seal (9, 10) are/is configured as O-ring seal.

10. The degassing device according to any one of the claims 1 to 9,
**characterized in that** the first seal (9) is embedded in a wall (21) comprising the degassing opening (7) and faces the mass element (8).

11. The degassing device according to any one of the claims 4 to 10,
**characterized in**
**that,** on the piston rod (6) which is configured as threaded rod, a collar (19) is provided which is ringshaped and projects radially outwards and which clamps the second seal (10) against the piston (3).

## Revendications

1. Dispositif d'aération (1) comportant un liquide pour aérer celui-ci, notamment pour aérer de l'huile dans un système d'huile d'un moteur à combustion interne, dans lequel
- le dispositif d'aération (1) disposé à la verticale en un état monté présente un piston (3) disposé de manière réglable en levage dans un espace de piston (2) au moyen du liquide (4) à aérer, qui dépasse par une tige de piston (6) à travers une ouverture d'aération (7) du côté du couvercle de l'espace de piston (2), **caractérisé par** les caractéristiques
- sur le côté qui se détourne de l'espace de piston (2) de l'ouverture d'aération (7) est disposé de manière réglable en levage un élément de masse (8) relié au piston (3) par l'intermédiaire de la tige de piston (6), dans lequel le piston (3) et l'élément de masse (8) sont réglables conjointement entre deux positions finales de levage,
- dans la position finale de levage inférieure l'élément de masse (8) obture par l'intermédiaire d'un premier joint d'étanchéité (9) l'ouverture d'aération (7) et empêche ainsi une aspiration d'air dans l'espace de piston (2),
- dans la position finale de levage supérieure le piston (3) obture par l'intermédiaire d'un deuxième joint d'étanchéité (10) l'ouverture d'aération (7) et empêche ainsi un échappement du liquide (4) à aérer,
- dans une position intermédiaire l'air sortant de l'espace de piston (2) peut parvenir dans l'environnement extérieur,
- l'élément de masse (8) tensionne le piston (3) dans la position final de levage inférieure.

2. Dispositif d'aération selon la revendication 1,
**caractérisé en ce que**
l'espace de piston (2) présente un espace d'accumulation de gaz (12) placé au dessus du piston (3) et un espace de liquide (13) placé au dessous du piston (3), dans lequel entre les deux espaces (12,13) un espace annulaire (14) délimité par le piston (3) et un logement (5) du dispositif d'aération (1) est disposé, lequel est réalisé comme un espace de décélération (15) ou présente au moins un tel espace et est relié de manière communicante à l'espace d'accumulation de gaz (12) et à l'espace de liquide (13).

3. Dispositif d'aération selon la revendication 2,
**caractérisé en ce que**
l'espace de décélération (15) est formé par au moins une rainure annulaire (16) réalisée sur le piston (3) et/ou sur le logement (5), laquelle décélère une hausse de liquide du liquide (4) à aérer dans l'espace de piston (2) pendant l'aération.

4. Dispositif d'aération selon une des revendications 1 à 3,
**caractérisé en ce que**
la tige de piston (6) est réalisée comme une tige filetée, sur laquelle sont vissés à une extrémité le piston (3) et à l'autre extrémité l'élément de masse (8).

5. Dispositif d'aération selon la revendication 4,
**caractérisé en ce que**
les pas de vis de la tige de piston (6) réalisée comme une tige filetée forment dans l'ouverture d'aération (7) un étranglement conjointement à une paroi de l'ouverture d'aération (7).

6. Dispositif d'aération selon une des revendications 1 à 5,
**caractérisé en ce que**
le piston (3) va en s'amincissant coniquement vers la tige de piston (6) sur son extrémité tournée vers l'ouverture d'aération (7).

7. Dispositif d'aération selon une des revendications 1 à 6,
**caractérisé en ce que**
l'élément de masse (8) est guidé dans un deuxième espace de piston (2).

8. Dispositif d'aération selon une des revendications 1 à 7,
**caractérisé en ce que** un capuchon de recouvrement (22) est prévu, lequel recouvre une extrémité du côté de l'élément de masse du dispositif d'aération (1) et empêche une infiltration d'impuretés dans le liquide (4).

9. Dispositif d'aération selon une des revendications 1 à 8,
**caractérisé en ce que**
le premier et/ou le deuxième joint d'étanchéité (9,10) est/sont réalisé(s) comme un joint torique.

10. Dispositif d'aération selon une des revendications 1 à 9,
**caractérisé en ce que**
le premier joint d'étanchéité (9) est encastré dans une paroi (21) présentant l'ouverture d'aération (7) et est tourné vers l'élément de masse (8).

11. Dispositif d'aération selon une des revendications 4 à 10,
**caractérisé en ce que** sur la tige de piston (6) réalisée comme une tige filetée, un collier (19) annulaire dépassant radialement vers l'extérieur est prévu, lequel serre le deuxième joint d'étanchéité (10) contre le piston (3).
